Europäisches Patentamt

European Patent Office

Office européen des brevets

(19)

(11) EP 0 789 407 A1

(12) EUROPEAN PATENT APPLICATION
published in accordance with Art. 158(3) EPC

(43) Date of publication:
13.08.1997 Bulletin 1997/33

(51) Int. Cl.⁶: H01M 2/04

(21) Application number: 96926617.0

(22) Date of filing: 09.08.1996

(86) International application number:
PCT/JP96/02265

(87) International publication number:
WO 97/07552 (27.02.1997 Gazette 1997/10)

(84) Designated Contracting States:
DE FR GB

(30) Priority: 11.08.1995 JP 206327/95

(71) Applicant: SEIKO INSTRUMENTS INC.
Chiba-shi, Chiba 261 (JP)

(72) Inventors:
• HAYASAKA, Toyoo
  Seiko Instruments Inc.
  Chiba 261 (JP)
• WATANABE, Shunji
  Seiko Instruments Inc.
  Chiba 261 (JP)
• SAKAMOTO, Hideo
  Seiko Instruments Inc.
  Chiba 261 (JP)
• SAKAI, Tsugio
  Seiko Instruments Inc.
  Chiba 261 (JP)

(74) Representative: Sturt, Clifford Mark et al
  J. MILLER & CO.
  34 Bedford Row,
  Holborn
  London WC1R 4JH (GB)

(54) ALKALINE CELL

(57) A negative electrode case plated with tin and made from copper or a copper alloy is subjected to a heat treatment, a diffused alloy layer is formed between tin and copper layers, and zinc or zinc alloy powders are used as a negative electrode active substance or the surface roughness of the contact surface of the negative electrode case with the gasket is set to 3 µm or less. Thereby, a button-shaped alkali battery which uses non-alloyed zinc or zinc alloy powders is obtained.

Fig. 1

EP 0 789 407 A1

**Description**

Technical Field

This invention relates to a button-shaped alkali battery and, more specifically, to an improvement in the solution leakage resistance of an alkali battery which uses a negative electrode case plated with tin and zinc or zinc alloy powders as a negative electrode active substance.

Background Art

A button-shaped alkali battery which employs a negative electrode case plated with tin to use non-alloyed zinc or zinc alloy powders as a negative electrode active substance (refer to Japanese Examined Patent Publication Nos. Hei 7-54704 and Hei 7-54705, for example) has been recently used (refer to Japanese Unexamined Patent Application Nos. Hei 6-65747 and Hei 6-089724, for example). According to the latter two publications, the reason why the surface of a copper layer between negative electrodes is plated with tin by an electroless method is that the generation of a hydrogen gas caused by metal impurities adhered to the negative electrode case is suppressed to reduce the swelling and self-discharge of the button-shaped battery and improve the solution leakage resistance thereof.

However, the above-mentioned button-shaped alkali battery which incorporates non-alloyed zinc or zinc alloy powders ("non-alloyed" will be omitted hereinafter) and a negative electrode case plated with tin is equivalent to a conventional button-shaped alkali battery which incorporates alloyed zinc powders and a negative electrode case in swelling and self discharge but is inferior in resistance to solution leakage. The cause of this is that tin plating produces sodium stannate in a caustic alkali electrolyte due to the following reaction and dissolves it.

$$Sn + 2NaOH + 4H_2O \rightarrow Na_2[Sn(OH)_6] + 2H_2$$

When this tin dissolution reaction is viewed in an actual button-shaped alkali battery, a portion of the negative electrode case where tin plating is not dissolved is a contact surface between the interior bottom portion of the case and a negative electrode compounding agent, and zinc spreads over tin plating rapidly, thereby preventing tin from contacting the caustic alkali electrolyte and dissolving in the electrolyte. On the other hand, a portion where tin plating is dissolved is a part of the interior side surface of the negative electrode case and a contact surface between a turn-up portion of the case and a gasket, all of which are not in direct contact with the negative electrode compounding agent. The former does not cause the leakage of the caustic alkali electrolyte whereas the latter causes the leakage of the electrolyte because there is a gap in a portion where the tin plating is dissolved, particularly the contact surface between the case and the gasket.

When a button-shaped alkali battery is fabricated using zinc or zinc alloy powders, the battery may swell by the production or accumulation of a hydrogen gas caused by metal impurities which adhere to the copper layer 10 of the negative electrode case 6 or enter a deep portion of a crack in the copper layer along with the passage of time. Therefore, tin is plated on the copper layer of a three-layer clad material (Ni-SUS3O4-Cu) commonly used in a negative electrode case to cope with the swelling of the battery (refer to Japanese Unexamined Patent Application Nos. Hei 6-65747 and Hei 6-089724, for example).

However, tin plating on the copper layer in the interior surface of the negative electrode case accelerates the leakage of the caustic alkali electrolyte.

The sealing of a button-shaped alkali battery is generally carried out by inserting a turn-up portion of a negative electrode case into a groove in a gasket 7 made from a synthetic resin such as nylon or polyethylene and integrating the assembly with a positive electrode case, or by inserting the gasket into an opening in the positive electrode case and integrating the assembly with the negative electrode case in disregard of the presence of alloyed zinc powders or the tin plating of the negative electrode case, followed by caulking the opening periphery of the positive electrode case inward and increasing the adhesion of the contact surfaces among the negative electrode case, the gasket and the positive electrode case so as to prevent the leakage of the caustic alkali electrolyte from the contact surfaces.

Further, to improve the effect of preventing the leakage of the electrolyte, a liquid sealing material 12 diluted with an organic solvent such as process oil or petroleum asphalt is injected into the gasket or the shape of the negative electrode case is modified.

However, the button-shaped alkali battery incorporating zinc or zinc alloy powders and a tin plated negative electrode case is inferior to a button-shaped alkali battery of the prior art incorporating alloyed zinc powders and a negative electrode case in resistance to solution leakage. The main cause of this is the difference of the rate of an electro-chemical creep phenomenon between tin and copper, that is, the caustic alkali electrolyte climbs up a tin plated surface faster than a copper surface. This phenomenon is affected by the surface roughness of the tin plating and the electrolyte climbs up more slowly as the surface is closer to a mirror surface. To finish a smooth tin plated surface, the surface of the copper layer before plating must be cleaned and polished into a smooth surface because the surface roughness of base copper appears almost directly as the surface roughness of a tin plated surface.

The thickness of the tin plating is advantageously 0.1 to 0.25 $\mu$m in the present invention. If the thickness is below 0.1 $\mu$m, pin holes are produced and the base copper is seen with the result of insufficient surface smoothness. If the thickness is above 0.25 $\mu$m, the tin plating peels off slightly by contact between the negative electrode cases and tin adheres to every portion of the negative electrode, causing a short circuit. The surface roughness of the copper layer of the negative electrode case after drawing is generally about 2 to 3 $\mu$m in the interior bottom surface of the case and 5 $\mu$m or more at a turn-up peripheral portion. As described above, in order to improve resistance to solution leakage, it is important to increase the adhesion of the contact surfaces among the negative electrode case, the gasket and the positive electrode case. Since the leakage of a solution in the contact surface between the negative electrode case and the gasket is large as another major cause, it is important to smoothen the surface roughness of the copper layer on the contact surface.

Disclosure of Invention

The inventors of the present invention have achieved the above object by forcedly forming a tin plating/copper layer diffused alloy layer which is stable in a caustic alkali electrolyte by subjecting the negative electrode case plated with tin of a button-shaped alkali battery which uses zinc or zinc alloy powders as a negative electrode active substance to a heat treatment at 120 to 180°C for 2 minutes or more.

In other words, it is necessary to reduce the proportion of a tin plating layer dissolved in the caustic alkali solution as much as possible by forming a tin/copper diffused alloy layer through a heat treatment of the negative electrode case plated with tin. Therefore, it is preferred to convert the tin plating into a 100% diffused alloy layer. If the thickness of the diffused alloy layer is 30% or more of the thickness of the tin plating, resistance to solution leakage of a practical level can be ensured. If the proportion of the diffused alloy layer is increased, the heat treatment time is prolonged. Therefore, the optimum proportion of the diffused alloy layer is 40 to 70%.

Further, in the present invention, to smoothen the surface of the copper layer of the negative electrode case produced by drawing, particularly a turn-up peripheral portion thereof before tin plating, wet-type polishing is carried out in a co-rubbing barrel, whereby the tin plating layer formed by an electroless method thereafter can be smoothened and the solution leakage resistance of the button-shaped alkali battery is improved.

Brief Description of Drawings

The above and other objects and advantages of the present invention will become apparent from the following description with the reference to the accompanying drawings, wherein:

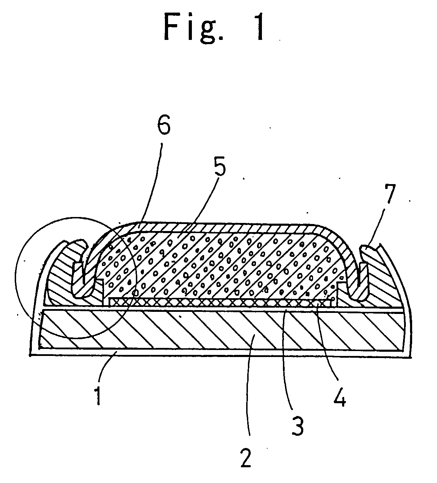

Fig. 1 is a sectional view of a button-shaped alkali battery; and

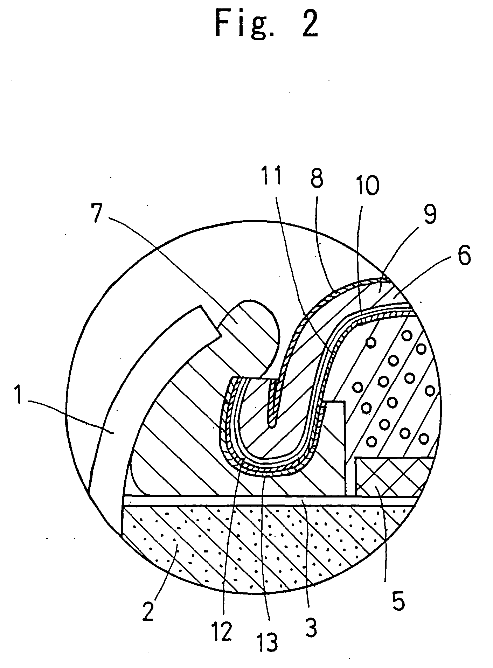

Fig. 2 is an enlarged view of a circled portion of Fig. 1.

Best Mode for Carrying out the Invention

A description is subsequently given of the method of the present invention.

(Embodiment 1)

A negative electrode case 6 [thickness: 200 $\mu$m, constitution: three-layer clad material, Ni (15 $\mu$m) - SUS (155 $\mu$m) - Cu (30 $\mu$m)] was drawn into a cup form in such a manner that a copper layer became an interior surface thereof. Thereafter, the case was degreased with an alkali-based surfactant and subjected to co-rubbing in a barrel using a solution containing an abrasive material (the negative electrode case was placed in a barrel and contacted to another negative electrode case by rotating the barrel, conditions: solution temperature of 20 to 30$_\circ$ C, number of rotations: 40/minute).

Then, the case was degreased again with an alkali-based surfactant, washed with water, acid and water, and plated with tin by an electroless method. As for the composition of an electrolyte, a solution containing 85 g/l of stannous chloride, 170 g/l of thiourea, 80 g/l of sodium hypophosphite, 85 g/l of tartaric acid and 10 cc/l of hydrochloric acid was prepared (solution temperature of 25 to 35$_\circ$ C), and a rotary barrel container was used to carry out a treatment at a rate of 50 rotations/minute. Tin was plated on the copper layer on the interior surface of the negative electrode case to a thickness of 0.15 $\mu$m. The thickness of the tin plating could be adjusted by the length of the plating time. The negative electrode case plated with tin was washed with water, dried (at 60°C), transferred to a magnetic vat and subjected to a heat treatment in an electric furnace at 140°C for 15 minutes. If the heat treatment temperature was above 180°C, a tin plating/copper diffused alloy layer became a little fragile and part of the alloy layer peeled off disadvantageously.

A so-called silver oxide battery SR621 was constructed by using the negative electrode case 6 thus produced, zinc alloy powders comprising 30 ppm of aluminum, 200 ppm of bismuth, 500 ppm of indium and the remainder consisting of zinc as a negative electrode active substance, and silver oxide as a positive electrode. 1,000 samples were prepared by using the above zinc alloy powders as a negative electrode active substance, polishing the negative electrode case in a co-rubbing barrel, plating with tin and heating as examples of the present invention and 1,000 samples were prepared without a heat treatment as comparative examples. 100 samples were taken out from each of these samples and kept at 60°C and 90% RH for 40 days to investigate the occurrence of solution leakage. The results are shown in Table 1.

(Table 1)

| Type of battery | Occurrence of Solution Leakage(%) |
|---|---|
| Battery of the Present Invention | 2 |
| Comparative batteries | 15 |

As is evident from the above results, the batteries of the present invention which were heated after tin plating have greatly improved resistance to solution leakage, compared with the comparative batteries constructed without a heat treatment.

The inventors of the present invention assume the reason for this improvement to be as follows.

Generally speaking, when tin is plated on the surface of copper, a copper/tin diffused alloy layer is formed gradually at normal temperature. However, when heated, the diffused alloy layer is formed quickly because tin becomes active. Since the alloy is composed of $Cu_3Sn$ or $Cu_6Sn_5$ and is hardly soluble in a caustic alkali electrolyte, a gap is rarely produced in the contact surface of the negative electrode case with the gasket, thereby making it possible to suppress the leakage of the caustic alkali electrolyte.

The negative electrode case subjected to the heat treatment is suitable for the mass-production of a coin-shaped alkali battery. When the negative electrode case is stored at normal temperature and normal humidity, it takes 1 to 2 years to convert the entire tin plating layer into a diffused alloy layer and hence, it is not suitable for mass-production.

(Embodiment 2)

A negative electrode case 6 [thickness: 200 μm, constitution: three-layer clad material, Ni (15 μm) - SUS (155 μm) - Cu (30 μm)] was drawn into a cup form in such a manner that a copper layer became an interior surface thereof Thereafter, the case was degreased with an alkali-based surfactant and subjected to co-rubbing in a barrel using a solution containing an abrasive material (the negative electrode case was placed in a barrel and contacted to another negative electrode case by rotating the barrel, conditions: solution temperature of 20 to 30∘ C, number of rotations: 40/minute).

Then, the case was degreased again with an alkali-based surfactant, washed with water, acid and water, and plated with tin by an electroless method. As for the composition of an electrolyte, a solution containing 130 g/l of stannous chloride, 170 g/l of thiourea, 80 g/l of sodium hypophosphite, 85 g/l of tartaric acid and 10 cc/l of hydrochloric acid was prepared (solution temperature of 25 to 35°C), and a rotary barrel container was used to carry out a treatment at a rate of 50 rotations/minute. Tin was plated on the copper layer on the interior surface of the negative electrode case to a thickness of 0.15 μm. The nickel layer 8 of the negative electrode case was not plated with tin in the electroless method. The negative electrode case was then washed with water and dried with hot air. The thickness of the tin plating could be adjusted by the length of the plating time. Since a thickness of 0.1 to 0.25 μm is sufficient to attain the object of the present invention, it is possible to obtain that thickness range of the plating in 5 to 20 minutes.

A so-called silver oxide battery SR621 was constructed by using the negative electrode case 6 thus produced, zinc alloy powders comprising 30 ppm of aluminum, 200 ppm of bismuth, 500 ppm of indium and the remainder consisting of zinc as a negative electrode active substance, and silver oxide as a positive electrode. 1,000 samples were prepared by using the above zinc alloy powders as a negative electrode active substance, polishing the negative electrode case in a co-rubbing barrel and plating with tin as examples of the present invention and 1,000 samples were prepared by plating with tin without polishing in a co-rubbing barrel as comparative examples. 100 samples were taken out from each of these samples and kept at 60∘ C and 90% RH for 40 days to investigate the occurrence of solution leakage. The results are shown in Table 2.

(Table 2)

| Type of battery | Occurrence of Solution Leakage(%) |
|---|---|
| Battery of the Present Invention | 3 |
| Comparative batteries | 19 |

Although both of the batteries of the present invention and the comparative batteries use non-alloyed zinc powders, as is evident from the above results, the batteries of the present invention which were constructed by plating the negative electrode case with tin after polishing in a co-rubbing barrel had greatly improved resistance to solution leakage, compared with the comparative batteries which were constructed without polishing. The negative electrode case of the present invention which was polished in the co-rubbing barrel can be used in all the button-shaped alkali batteries except silver oxide batteries.

Industrial Applicability

As described in detail above, according to the present invention, by using a negative electrode case plated with tin, the leakage of a caustic alkali electrolyte from the contact surface between the tin plated surface of the negative electrode case and the gasket can be greatly suppressed and non-alloyed zinc or zinc alloy powders can be used, thereby making it possible to provide a silver oxide battery and all types of button-shaped alkali batteries which are non-toxic and excellent in resistance to solution leakage.

**Claims**

1. An alkali battery comprising a negative electrode case plated with tin and made from copper or a copper alloy, wherein more than 30% of the thickness of tin plating comprising a diffused alloy layer.

2. The alkali battery of claim 1, wherein said negative electrode case plated with tin is heated at 120 to 180° C more than 2 minutes.

3. An alkali battery in which the surface roughness of the contact surface of a negative electrode case having a copper or copper alloy front surface with a gasket is 3 $\mu$m or less and the front surface is plated with tin.

4. The alkali battery of claim 3, wherein the thickness of the tin plating is from 0.1 $\mu$m to 0.25 $\mu$m.

5. The alkali battery of claim 1 or 3, wherein a negative electrode active substance is zinc or zinc alloy powders.

# Fig. 1

# Fig. 2

## INTERNATIONAL SEARCH REPORT

| International application No. |
|---|
| PCT/JP96/02265 |

**A. CLASSIFICATION OF SUBJECT MATTER**

Int. Cl$^6$  H01M2/04

According to International Patent Classification (IPC) or to both national classification and IPC

**B. FIELDS SEARCHED**

Minimum documentation searched (classification system followed by classification symbols)

Int. Cl$^6$  H01M2/02, H01M2/04

Documentation searched other than minimum documentation to the extent that such documents are included in the fields searched

| | |
|---|---|
| Jitsuyo Shinan Koho | 1926 – 1996 |
| Kokai Jitsuyo Shinan Koho | 1971 – 1995 |
| Toroku Jitsuyo Shinan Koho | 1994 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 7-99044, A (Sumitomo Special Metals Co., Ltd.), April 11, 1995 (11. 04. 95), Column 6, line 41 to column 7, line 14 (Family: none) | 1 - 5 |
| A | JP, 7-57717, A (Katayama Tokushu Kogyo K.K.), March 3, 1995 (03. 03. 95), Column 5, lines 39 to 43 (Family: none) | 1 - 5 |
| A | JP, 47-43926, A (Hitachi Maxell, Ltd.), December 20, 1972 (20. 12. 72)(Family: none) | 1 - 5 |
| A | JP, 6-89724, A (Matsushita Electric Industrial Co., Ltd.), March 29, 1994 (29. 03. 94)(Family: none) | 1 - 5 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| October 30, 1996 (30. 10. 96) | November 12, 1996 (12. 11. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)